# EUROPEAN PATENT SPECIFICATION

(11) **EP 0 751 921 B1**
(45) Date of publication and mention of the grant of the patent: **08.08.2001**
(21) Application number: 96900562.8
(22) Date of filing: 04.01.1996
(51) Int. Cl.: C04B 41/50

(54) **METHOD FOR OBTAINING GLAZED CERAMIC ARTICLES**
VERFAHREN ZUR HERSTELLUNG VON GLASIERTEN KERAMISCHEN ARTIKELN
PROCEDE DE PRODUCTION D'ARTICLES CERAMIQUES VERNIS

(30) Priority: 20.01.1995 IT MI950093
(43) Date of publication of application: 08.01.1997
(73) Proprietor: LAMBERTI S.p.A., 21041 Albizzate (Varese) (IT)
(72) Inventor: CARDA, Juan Bautista, E-Villareal (ES); CESTARI, Mauro, I-41026 Pavullo (IT); CHIAVACCI, Dario, I-21048 Solbiate Arno (IT); LI BASSI, Giuseppe, I-21026 Gavirate (IT); NICORA, Carlo, I-21100 Varese (IT)
(74) Representative: Luksch, Giorgio, Dr.-Ing.
(86) International application number: EP9600018
(87) International publication number: WO9622259

(56) References cited:
- EP-A- 0 230 534
- DD-A- 136 389
- DE-C- 4 003 627
- DE-C- 4 309 267
- GB-A- 1 157 587
- US-A- 3 898 091
- DATABASE WPI Section Ch, Week 9110 Derwent Publications Ltd., London, GB; Class L03, AN 91-069004 XP002001135 & JP,A,03 016 981 ( JAPAN EXLAN KK) , 24 January 1991
- CHEMICAL ABSTRACTS, vol. 92, no. 24, 16 June 1980 Columbus, Ohio, US; abstract no. 202487z, XP000185843 & JP,A,79 157 118 (NARUMI CHINA CORP.) 11 December 1979

## Description

The present invention relates to a method for obtaining glazed ceramic articles.

Ceramic articles, particularly flooring and furring tiles, make a market of primary importance, which course, strictly linked to the building one, is continuously growing up in the whole world.

The need of increasing the productivity of the plants has driven the ceramic industry and the producers of machines and plants connected thereto towards the research and the adoption of solutions technologically innovative both as for plant engineering and ceramic materials for themselves.

In practice, all the steps of the ceramic process for producing tiles have been reviewed and sped up; the glazing steps however still show some opportunity of improvement.

One of the technology for producing flooring and furring tiles is based upon applying an aqueous dispersion of the ceramic materials which are going to form the glaze, to the baked or unbaked support of the tile and on the subsequent baking in roller mono-layer oven (up to 1200°C for 35-60 minutes) thus obtaining the glaze by sintering said ceramic materials.

The ceramic materials which originate the glaze are generally obtained starting from basic oxides and acid oxides subjected to fusion, known in the art as fritting, whereby frit is obtained which is, in fact, the glaze basic materials.

The frit is then milled in an aqueous phase, together with other components, such as pigments charges, milling assistants, etc., in order to obtain a fine aqueous dispersion suitable to be applied on the support.

The adhesion between the formed glaze and, the support is assured by the conditions of the cycle (times and temperatures) at which one works and by the composition used; to assure a better adhesion, an intermediate layer (having an intermediate composition between the support and the glaze), called engobe, is used very often, which after the baking, forms and interlayer which has the function to link the support and the true glaze, hindering the reciprocal contamination, and covers the eventual colouring of the support.

Whenever one would or should need a very high surface hardness and abrasion resistance, stoneware tiles, without glazes or engobes, which would reduce the mechanical characteristics of stoneware itself, are used. The stoneware tile thus obtained has yet an unrefined aesthetic appearance and cannot replace the more refined flooring monobaked tile, even if it is more resistant and appreciated for its low porosity, antifreezing and high breaking load than such tiles. It is however possible to further refine the stoneware tiles mechanically lapping and polishing them and subsequently treating them with waxes and varnishes; such operation involving however a large expense.

The target to utilise porcelained stoneware as the tile support material, maintaining the functional peculiarities of the stoneware (hardness, abrasion, etc.) and improving the aesthetic ones by a glazing step, is however impracticable for at least two reasons, both connected to the fact that the possible glaze should be very hard and therefore inherently endowed with refractory characteristics. The first reason is that working in ovens at temperatures and with characteristics unavailable nowadays would be needed for the fritting step. The second reason, even more serious, is that the frit, to be transformed into the glaze, after having been applied to the support, should be baked at very high temperatures, near to the "hemisphere point", i.e. at the temperatures to which the glaze wets and seeps through the support ensuring the formation of an inter-layer which allows a good adhesion: in practice the rapidity imposed by the modern baking cycles, the refractory characteristics of these hard glazes and the fact that the maximum hardness develops itself at the "sphere point" (i.e. before the glaze wets the support), do not allow a satisfactory technical result.

Generally, what just above described represents a shortcoming even for other kinds of support, whenever high surface hardness, by applying glaze, would be obtained.

The glazing technique, nowadays used by everybody for the production of ceramic tiles and crokery, generally show some limit which stimulated the study of alternative solutions.

All the new techniques try to avoid passing through the preparation of the frit, substantially resorting to using the "sol gel" technique.

The sol gel technique consists in using the so called "precursors", containing the chemical elements needed for the making of the glaze ceramic material, which, preferably in the presence of organic solvents, carry to a colloidal solution (the sol). The latter is applied to the support whereon it changes into gel by evaporating the solvent or by slow polymerisation of the sol. The gel is made of a pre-arranged molecular structure of oxides and hydroxides which, because of the strict contact shows sintering temperatures and/or times decidedly lower than a corresponding ceramic one obtained from crystalline powders or vitreous frits.

The gel is then subjected to a step of thermic treatment which transforms it into ceramic glaze.

In the patents GB 1 166 991 and GB 1 166 992, there is disclosed the use of the esters of the boric and silicic acids combined with metal resinates, such as lead, zinc and calcium, in different organic solvents, applied under the shape of a thin film to be subjected to baking to obtain boron-silicic glazes.

In the patents US 4 801 399 and US 4 921 731, there is provided the preparation of colloidal solutions (sol) starting from alcoholates and nitrates of aluminium and other metals, by heating in water and various organic solvents.

The colloidal solutions (sol) are applicable to different supports in several ways to attain ceramic articles endowed with better properties.

The patent DE 4 003 627 describes a system of glazing cement supports or the like by using aqueous solutions of aluminium, lead, etc. salts in the presence of a colloidal silica generator (sodium silicate or an organic ester of the silicic acid).

The patent WO 91/08179 describes how vitreous glazes, shining and endowed with an excellent chemical and mechanical strength on a ceramic substratum (tiles and crockery), by applying a sol obtained starting from organometallic precursors in organic solvents, can be obtained.

In all these methods, besides to clear advantages, some drawbacks, which go from the use of expensive substances, which manufacture is hard and potentially toxic (resinates, alcoholates, esters of the silicic acid, etc.), to the use of organic solvents, are noticeable.

On one hand, the methods for preparing sol and gel are often complicated, on the other hand, the organic solvents represent an environmental problem, because of their handling, both during the preparation of sol and during the step of applying and baking the articles.

Then, they have to be burned off, during the densifying step, by baking in the making of the glaze, involving clear problems concerning gaseous emissions. Such situation, adversely affects the cost of the whole process, which further shows remarkable ecologic drawbacks.

Actually, the sol gel technique, widely described in literature too ("Rivestimenti sottili mediante deep coating con metodo sol gel" (Thin coatings by deep coating with the sol gel method), M. Guglielmi, Rivista della Stazione Sperimentale Vetro, No. 4, 1988, p. 197-199; Sol gel processing of complex oxide films, G. Yi and M. Sayer, Ceramic Bulletin, Vol. 70, No. 7, 1991, p. 1173-1179; Sol gel processing of ceramics, A. Atkinson and J. Segal, Ceramic Technology International, April 1993, 187-190), has been used for special ceramic applications only, for instance in the field of electronics, optics, as a protecting agent for special glasses, for biomaterials, etc., but it has not gained a mass utilisation in the glazing of tiles and crockery from an industrial point of view.

In the above cited article by Atkinson, reference is made to the possible use, besides alcoholates, of aqueous sol too, but with the bound that one can form layers having a maximum thickness of 1 µm (micron), as otherwise cracks and damages of the glaze, due to the shrinkage of materials, reveal themselves.

GB-A-1157587 discloses a method of applying a protective glaze to a SiC element comprising the overall impregnation of it with an aqueous solution of a water-soluble aluminum salt and a water soluble alkaline earth metal salt, drying the element and firing it aiming to preserve the element from corrosion.

DD-A-136389 discloses a method for protecting SiC elements, specifically heating elements, from oxidation, comprising impregnating them with an aqueous or alcoholic solution comprising boron, aluminum and alkaline earth metal compounds, providing further the resulting elements with poreless surfaces.

JP-A-3-16981 discloses glazing of a tile by treatment with an aqueous solution comprising a tin carboxylate precursor, in particular tin oxalate, resulting by reacting, up to 300°C, the tin derivative with a dopant and hydrogen peroxide. The resulting glazed tiles show no pinholes and maintain their electric conductivity.

US-A-3898091 discloses a method for glazing ceramic substrates which necessarily comprises the use of surfactants; the glazing composition has to be milled and preferably fritted before being incorporated into a water dispersion for the application to the ware. The resulting ware shows minimized surface defects.

The present invention intends to intervene in the real glazing step, working both on the components necessary to obtain the glaze and on the way to apply them on articles.

One of the purposes of the present invention is to provide a glazing method which does not involve the making of the frit, neither milling steps for obtaining glaze dispersions and generally a power and economic saving, besides to the simplifying of the ceramic process.

Another purpose of the present invention is to provide a method completely carried out in an aqueous environment, easily applicable industrially for the common ceramic applications, such as the glazing of tiles and crockery, besides to the other, even particular, ceramic applications such as, for instance, the ones in the field of electronics, optics, as a protecting agent for glasses, for biomaterials, etc.

A further purpose of the invention is to allow to obtain glazed ceramic articles having a thickness of the ceramic layer much higher even that 1 µm (micron). These and other purposes which will be understood by the comprehension of the present disclosure, are attained by a method for obtaining glazed ceramic articles consisting of applying to tiles and crockery and aqueous solution or dispersion containing a nonfritted precursor of the desired glaze wherein said precursor consists essentially of a mixture of:
- colloidal silica,
- at least one inorganic metal compound selected from borate and nitrate,
- at least one metal acetate,
- and optionally zirconium oxychloride,
said metal is Al, Ti, Y, Zn, Zr, Ca, Mg and/or Na; and subsequent thermal treatment of the tiles and crockery at 500-1300°C for 30-120 minutes.

In the present invention, as a precursor, that mixture of organic and inorganic compounds, soluble or dispersible in water, able to originate the glaze at the conditions utilized, is meant.

According to the invention, the glaze precur sors are in a form which allows to obtain the formation of a good interlayer (thus avoiding the use of an engobe) and, more generally, to lower times and temperatures at which the transformations of the compounds, which make the precursors, to originate the glaze, occur.

It is therefore possible, by carrying out the present invention, to obtain very hard glazes even by fast baking tiles in monolayer roller ovens in monobaking.

According to the invention, the compounds which form said precursor, contained in said aqueous solution or dispersion, are organic and inorganic.

The preferred organic compounds are the salts, endowed with a very good water solubility, of the acetic acid with one of said metals.

Silica can be of the kind obtained by precipitation (by acidification of aqueous solutions of sodium silicate) or by pyrolysis of silicon tetrachloride under oxygen.

Examples of the preferred precursors to carry out the present invention are aluminium nitrate, zinc acetate, magnesium acetate, zirconium oxychloride, calcium nitrate, yttrium acetate, calcium acetate and colloidal silica.

The chemical composition can vary within broad ranges; the compounds which make the precursors of the desired glaze must be preferably water soluble; alternatively, some of them can be disposable in a solid, extremely divided, form, like for the colloidal silica, eventually pre-dispersed in water.

The formulations necessary to carry out glazing according to the present invention are obtained simply by dissolving or dispersing the compounds in water, with or without heating and under stirring.

The content of dry material of these formulations can be varied within broad ranges, generally between 15 and 70% by weight, preferably at the highest concentration compatible with the solubility and applicability to the support.

The precursors are mixed in the ratios required by the final composition of the glaze, which is a function of the aesthetic and functional characteristics according to well known and consolidated art (L. Contoli, A. Brusa, Ceramica Informazione, May 1991, N. 302, p. 273-282: Smalti ceramici, S. Stefanov, S. Batschwarov, Faenza Editrice 1991).

The formulations can further contain various additives necessary to stabilising the formulation itself (to avoid the separation of the phases, for example) or to control the reology in the application step or to adjust the water release or the penetrating speed after the application on the support. Said compounds can be modified, natural or synthetic, polymers or surfactants, or pH adjusting agents.

It is further possible that the formulation contains other materials, for instance pigments, which give the article special effects.

Now, it has been surprisingly found that it is sufficient to apply these aqueous formulations to the ceramic support and proceed to baking according a time-temperature cycle suitable to the desired physico-chemical characteristics (30-120 minutes at 500-1300°C, conveniently, in the case of monobaking, 35-60 minutes at 1200°C at most, to obtain glazed articles). Said articles result endowed with very good aesthetic and functional characteristics.

The advantage obtained in the case of the porcelained stoneware is both technical/aesthetic and economic because the polishing step is avoided. In the case of the tiles obtained by glost firing, the advantage is mainly economic because the temperature of the formation of the glaze layer is comprised between 600° and 950°C, i.e. noticeably lower than the traditional technique (up to 1200°C).

The formulations can be applied following techniques known in the art, for instance by air-brushing, or distributed on the support while moving or, further, by dipping paint screen processing.

The amount of the formulation deposited on the support can vary within broad limits, depending upon the desired effect and the applying technique, generally between 2 and 800 g/m², preferably between 20 and 200 g/m² of precursors, as dry material, corresponding to an amount comprised between 1 and 100 g/m² and between 10 and 50 g/m² as dry oxides and anhydrides, respectively.

The application can be made in only one or in more steps depending upon the thickness or the desired effect. The article thus treated is then subjected to baking which can be carried out, for instance, in monolayer roller ovens and with fast cycles of 35-120 minutes and generally at temperatures lower than the ones required in the known art for the development of the desired properties.

In fact, it is possible, for instance, to obtain very hard and shining glazes at temperatures of only 1200°C.

The final characteristics of the articles have a very good quality.

It is possible to obtain a very high abrasion resistance, from a functional point of view, evaluated according to the PEI method of the loss of appearance to abrasion.

The articles obtained by the method of the present invention show a strength till values higher than IV PEI and a hardness otherwise unapproachable (1200 at the Vickers microhardometer). The formation of an interlayer completely penetrated in the support assures a perfect adhesion.

It is possible to obtain, from an aesthetic point of view, a various range of surfaces: from the ones extremely shining (bright) and transparent, to those ones dull and glazed, endowed or not with chromatic effects. It is further possible to obtain particular effects subsequently applying, before baking, two or more formulations, having a different composition, superimposed or geometrically combined, depending on the desired decorations.

To obtain chromatic effects, it is sufficient to add, to the liquid formulation, the suitable amount of a ceramic pigment (in a pre-milled form) generally 5-10% on the dry content of the liquid formulation, and to apply the new composition.

The application can be sprayed, for instance to obtain a uniform colour or applied by paint screen processing, when one wishes to reproduce a decoration, eventually with subsequent steps and different colours.

In the specific case of the porcelained stoneware, the advantage of a colour obtained applying only a thin surface layer is evident in comparison with the traditional massive colouring of tiles.

The following examples illustrate the invention without limiting it.

The Examples 1-4 have been reported as a table and compared with the traditional glazes.

Many of the applying examples of the present invention, because of the perspectives of the growth of this market, the importance gained by the porcelained stoneware and the difficulties which its glazing entails, are referred to this support. It is possible, in any case, to replace such support with other ones, maintaining analogous advantages in the new glazing process.

| Support: oxide composition (% by weight) | |
|---|---|
| SiO₂ | 66.95 |
| Al₂O₃ | 23.51 |
| TiO₂ | 0.15 |
| Fe₂O₃ | 0.49 |
| CaO | 0.55 |
| MgO | 0.29 |
| K₂O | 0.55 |
| Na₂O | 3.35 |
| Firing loss | 4.16 |

The powders have been obtained by wet milling, atomising drying till a 5% residual humidity, and subsequent pressing using a press having isostatic plugs at 450 kg/cm². Subsequent drying with an outlet temperature of 80°C and a humidity of 1.5%.
Crude dimension: 32.4 x 32.4 cm, 6 mm (thickness)
(shrinkage: about 8%).

Two kinds of compositions which respectively, after baking, originate a glaze having amorphous characteristics, i.e. glass, and a mixed vitreous-ceramic system, have been selected (Table 1, Examples 1-4).

The formulations have been prepared by adding precursor compounds to water and by heating under stirring at 65-70°C for 30 minutes and subsequent cooling at room temperature. The additives have been added at the end in the form of concentrated aqueous solutions (10-20%).

The liquid formulations have been manually sprayed, by airbrushing, in more steps, maintaining the tiles at a distance of 40 cm, in order to deposit the amount required for the glazing, as shown in Table 1.

5 minutes after the application of the formulations, the tiles have been dried at 140°C for 2 h in a hot air oven.

The dried tiles have been baked in a mono-layer roller oven with a baking cycle of 57 minutes and a maximum temperature of 1200°C.

After baking and cooling, the tiles have been examined as to the aesthetic and functional characteristics, as it is reported in Table 2.

Standardised methods have been used when possible, and reported, in any case, below Table 2.

The comparison has been effected registering the data of the evaluations effected on tiles obtained by the examples of the present invention and comparing them to those ones of the traditional glazed surfaces of shining monoporous (comparison 1) and mat monobaked (comparison 2) tiles, respectively.

The results of the comparison checks effected on unglazed porcelained stoneware (the same support and the same baking cycle used in the examples 1-4, both as such and after polishing, have been further reported.

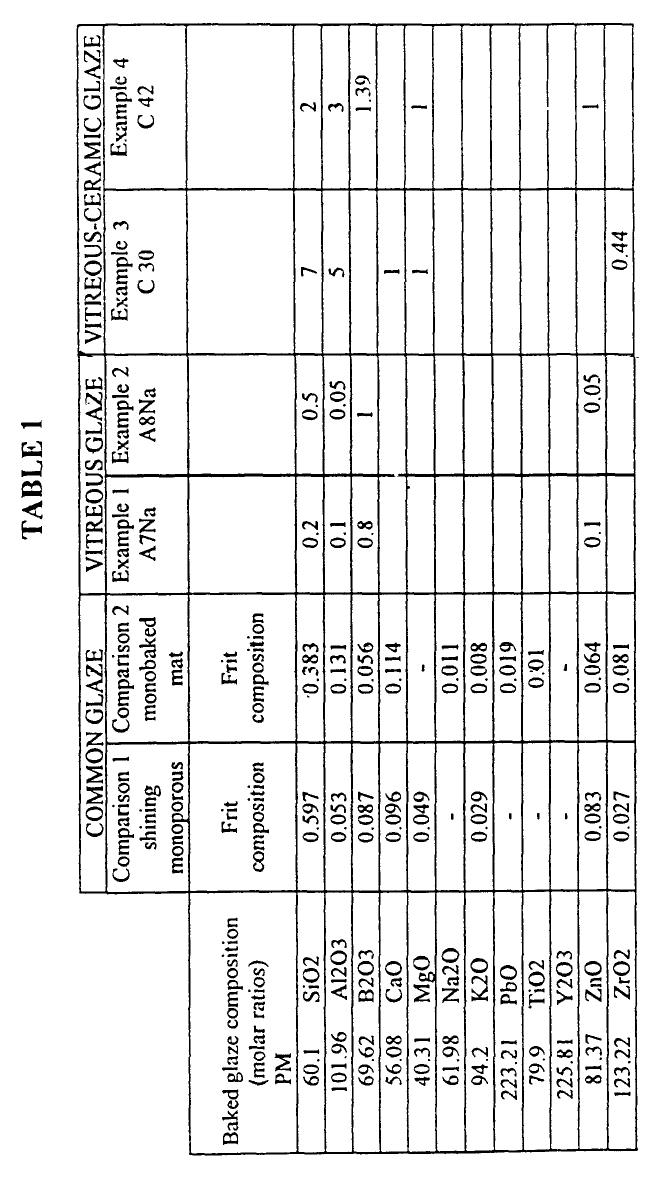

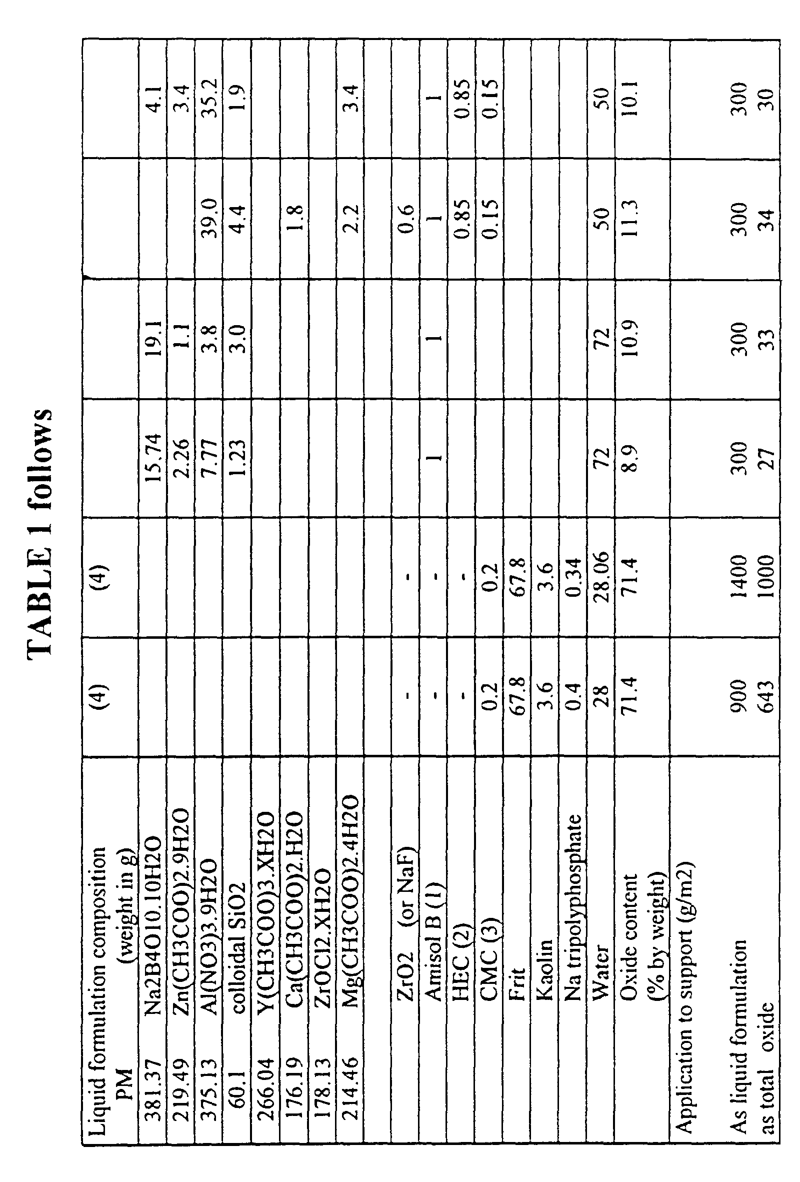

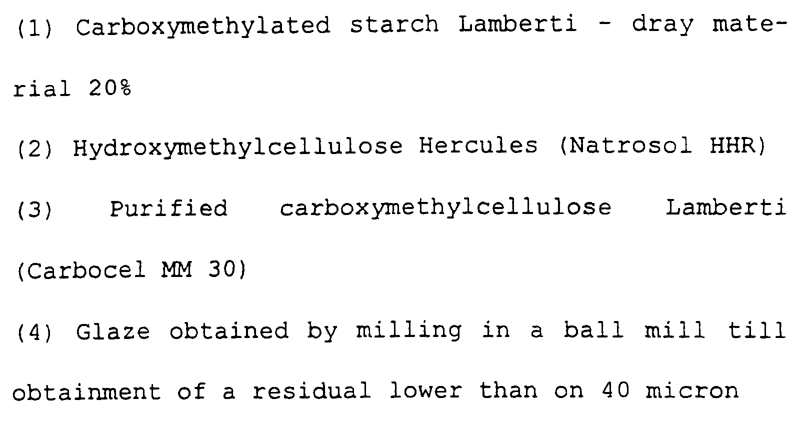

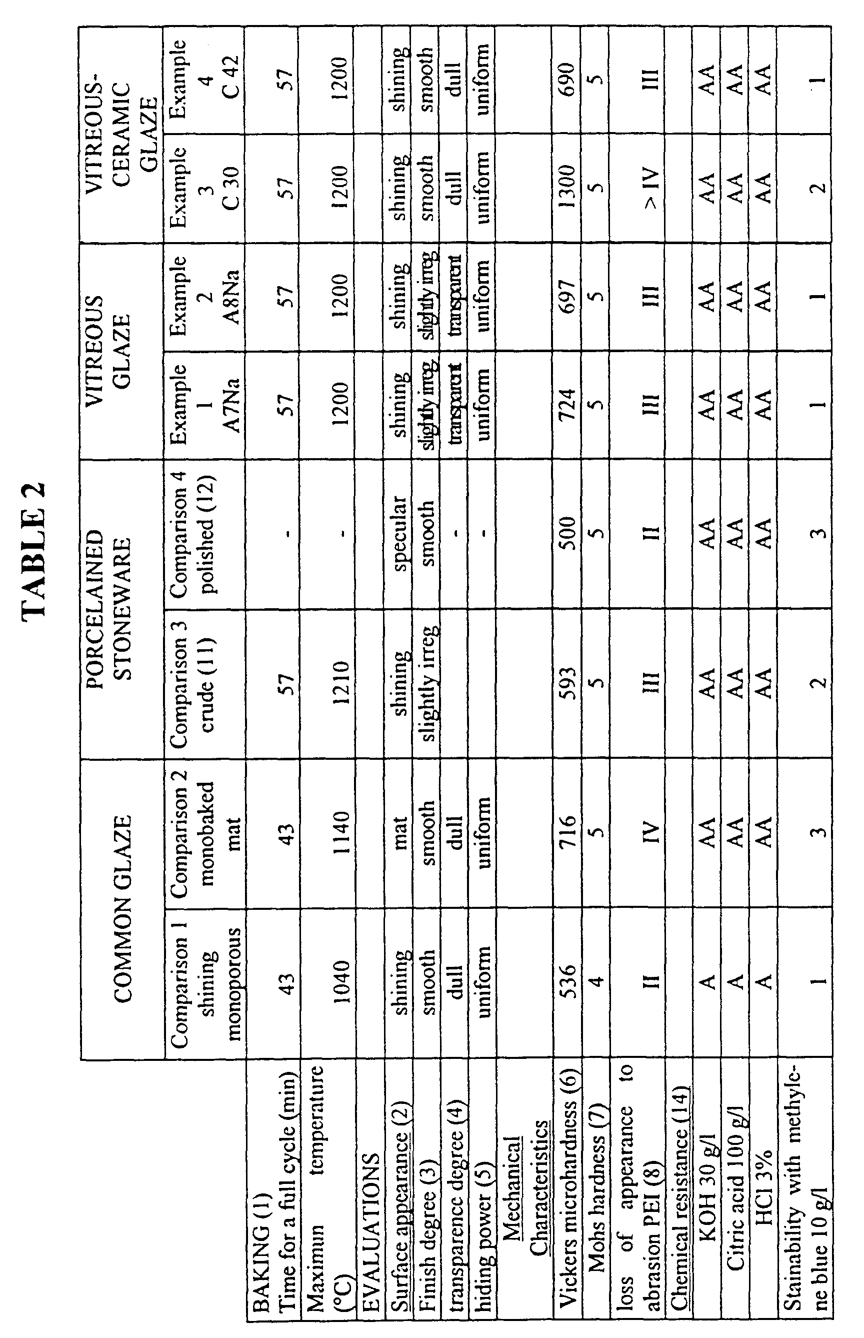

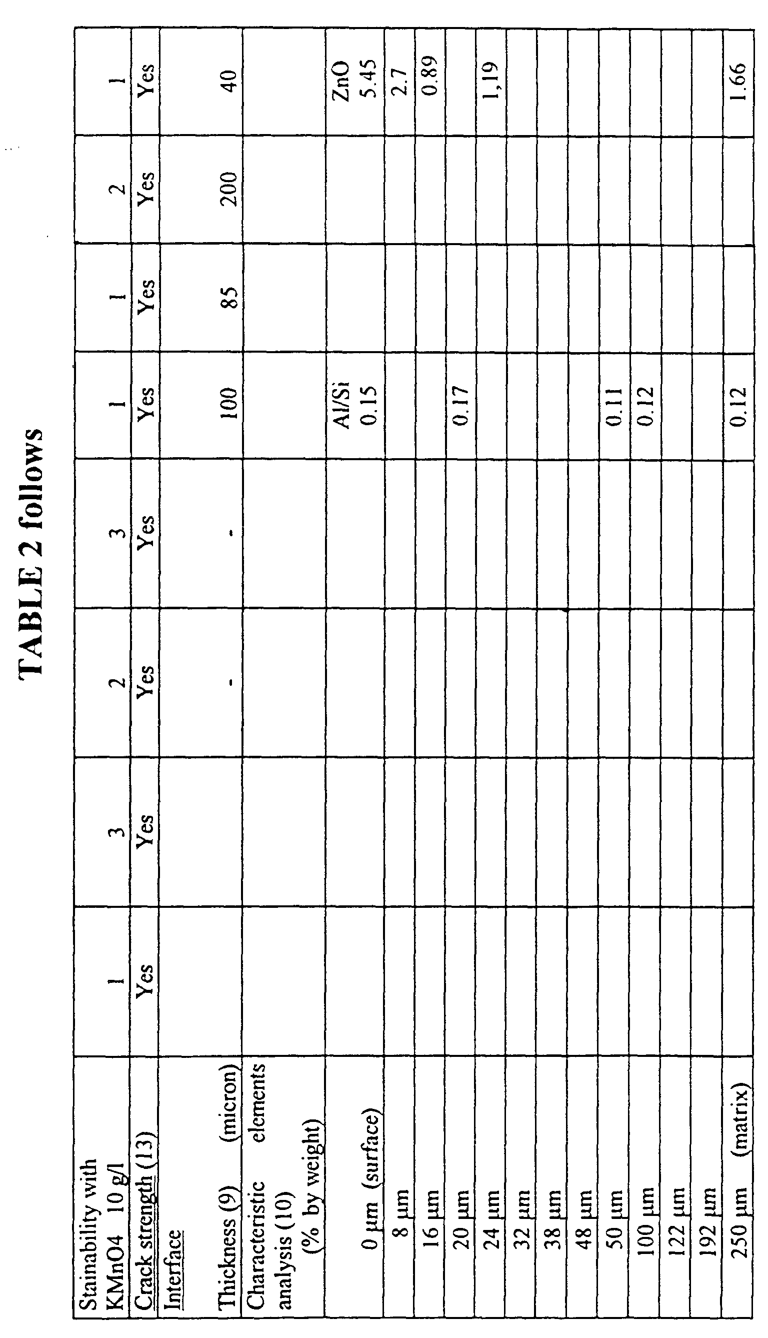

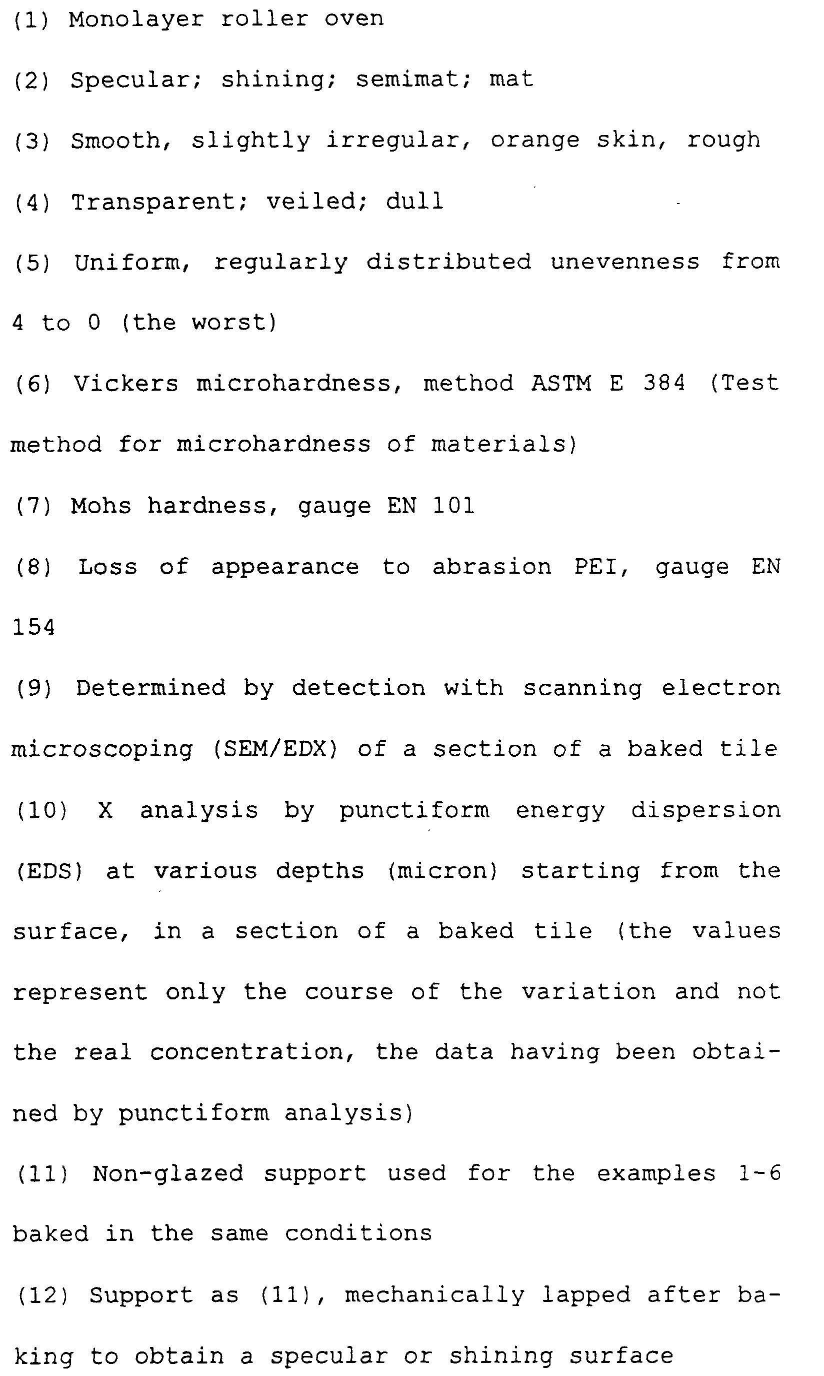

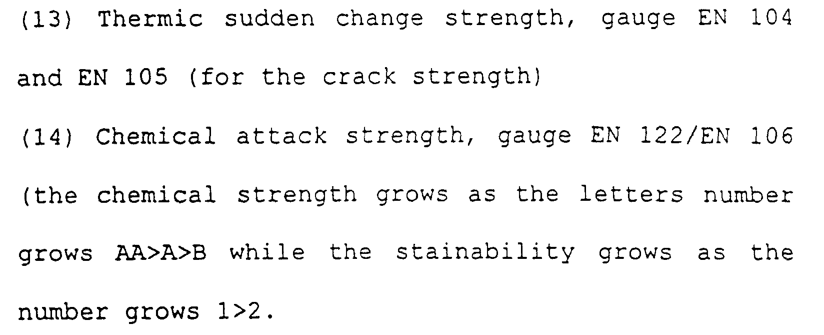

The Examples 1 and 2 show how it is possible to attain glazed tiles having a surface with an appearance bright and shining (transparent coating) endowed with a sufficiently high degree of hardness and abrasion resistance.

The advantages attained, being able to use a porcelained stoneware-like support (comparison 3, deficiency: low hardness), obtaining an appearance very close to polished porcelained stoneware (comparison 4) without resorting yet to the expensive step of polishing, are evident.

The Examples 3 and 4 show a system of glaze precursors very versatile which permits to obtain both dull covering glazes having an exceptional hardness (example 3) and glazes having a medium hardness but very shining and bright (Example 4).

The addition of nucleating agents (NaF or ZrO₂) helps the crystallisation of very hard compounds dispersed in a vitreous matrix, as it has been verified by the X-ray analysis which evidenced the formation of anorthite (pseudowollastonite) and magnesium spinels.

The addition of borax helps instead the formation of the vitreous phase improving brightness but decreasing hardness.

The glaze obtained, for all the examples (1-4), is endowed with a very good adhesion to the matrix of the support, as it can be noticed from the thickness of the interface, which is clearly seenable by scanning electron microscoping effected on sections of tiles normal to glazing.
Also the punctiform X-ray analysis by dispersing power carried out on the same sections shows that characteristic elements of the glaze (zinc oxide in the Example 4 or the ratio Al/Si in the Example 1) decrease as one enters the matrix, which means a deep penetration of the phases.

The optical microscoping and the scanning electron microscoping effected on the glaze surfaces show in any case a full coating with zones of imperfection very small and regularly distributed.

### EXAMPLE 5

Tests of coloured glazing and decoration have been carried out using the same support and manner described in the Examples 1-4.

1,6 parts by weight of a pre-milled pigment (95% lower than 1 micron) were added to 100 parts by weight of the liquid formulation of the Example 2 (formulation A 8 Na):
7a) coral pink (Zr, Fe, Si) - CK 11138 (produced by Ferro Corporation, Cleveland, Ohio, USA)
7b) praseodymium yellow (Zr, Pr, Si) - CK 10032 (produced by Ferro Corporation, Cleveland, Ohio, USA);
7c) Blue (Zr, V, Si) - CK 15116 (produced by Ferro Corporation, Cleveland, Ohio, USA)
7d) cobalt green (Co, Cr, Zn) - CK 14126 (produced by Ferro Corporation, Cleveland, Ohio, USA).

The so obtained mixture have been sprayed (300 g/m²) obtaining , after baking at the conditions of the Examples 1-4, surfaces shining and coloured, having a perfect hiding power and colour uniformity.

The same mixtures have been applied by paint-screen processing obtaining, after baking, an accurate reproduction of the decoration and characteristics of the decoration comparable with those ones of the common technique.

The example illustrates how it is possible to obtain coloured or decorated glazed surfaces, completely comparable with those ones obtained by the expensive process of mass colouring.

### EXAMPLE 6

Glazing in glost firing.

The formulation of the Example 2 (A 8 Na) was sprayed (300 g/m²) on the surface of a pre-baked tile (biscuit) obtained starting from a common furring malm (red clays).

The piece was then subjected to glost firing in monolayer roller oven using:
8a) 60 minutes and maximum at 830°C
8b) 30 minutes and maximum at 1070°C.

A shining vitreous layer endowed with very good aesthetic characteristics was obtained in both cases.

The example illustrates how it is possible to obtain glazed surfaces endowed with aesthetic characteristics comparable with common glost firing (baking time 60 minutes and temperature 1050-1070°C), using the formulations of the present invention and baking temperature and time extremely lower.

### EXAMPLE 7

Glazing of monobaking supports different from stoneware.

Glazed tiles, using the supports of the comparative examples 1 (monoporous) and 2 (monobaking), by spraying the liquid formulation described in the Example 2 with the same weights in grams and methods of treatment therein described, were obtained.

The tiles are endowed with aesthetic characteristics as much satisfactory as those ones of the comparative examples, having yet a hardness surface, abrasion resistance and chemical strength higher, and near to those ones of the Example 2.

### EXAMPLES 8

Comparison with the sol gel technique. Starting from tetraethyl silicate (10,4 g) and triethyl-borate (29 g) dissolved in ethyl alcohol (40 g), by treatment, under stirring, with 1 g of 0,01M hydrochloric acid and 1 g of water, a sol was prepared following the teachings of the WO 91-08179 patent. A solution of aluminium isopropoxide (2,1 g) in isopropanol (12,68 g) and ethylacetoacetate (2,5 g) was then added dropwise within 40 minutes. The mixture was subjected to sonicating for 15 minutes and subsequently zinc acethylacetonate hydrate (1,32 g) was added. The resulting mixture was maintained in a closed vessel for 4 days at room temperature.

The oxide content of such mixture is equal to that one of the Example 2, as it results from the following table

| Liquid formulation composition | | Example 7 | | Example 2 | |
|---|---|---|---|---|---|
| PM | Formula | g | Gram-atomic weight | g | Gram-atomic weight |
| 381.37 | Na2B4O7 10H2O | - | - | 19.1 | 0.2 |
| 145.99 | B(OC2H5)3 hydrate | 29 | 0.2 | - | - |
| 219.49 | Zn(CH3COO)2 ) 9H20 | - | - | 1.1 | 0.006 |
| 263.59 | ZnAcAc | 1.32 | 0.005 | - | - |
| 375.13 | Al(NO3)3 9H2O | - | - | 3.8 | 0.01 |
| 204.25 | Al(OiC3H7)3 | 2.1 | 0.01 | - | - |
| 60.1 | SiO2 | - | - | 3 | 0.05 |
| 208.33 | Si(OC2H5)4 | 10,4 | 0.05 | - | - |
| | Amisol B | - | - | 1 | - |
| | Water | 1 | - | 72 | - |
| | Ethyl alcohol | 40 | - | - | - |
| | Isopropyl alcohol | 12.68 | - | - | - |
| | Ethyl acetoacetate | 2,5 | - | - | - |
| 0.01 M | Hydrochloric acid | 1 | - | - | - |
| | | 100 | | 100 | |

The mixture was sprayed on a support for porcelained stoneware (Examples 1-4) at a weight in grams of 300 g/m².

The support was then treated in oven at the same conditions of the Example 2. The surface was very irregular showing a great flaw which compromises the aesthetic appearance and the stainability with methylene blue and permanganate.

It has to be noticed that the process for preparing the sol is a complicated operation and that the mixture is based on easily inflammable organic solvents (about 8°C), which is cause of danger both during the preparation and above all, in the applying phase (in ceramics, a process based on the use of the solvent would be unacceptable).

Besides, the difficulty to obtain uniform ceramic layers, having a thickness greater than 1 µm (micron), by sol-gel technique, was pointed out.

## Claims

1. A method for obtaining glazed ceramic articles consisting of applying to tiles and crockery an aqueous solution or dispersion containing a nonfritted precursor of the desired glaze wherein said precursor consists essentially of a mixture of:
- colloidal silica,
- at least one inorganic metal compound selected from borate and nitrate,
- at least one metal acetate,
- and optionally zirconium oxychloride,
said metal is Al, Ti, Y, Zn, Zr, Ca, Mg and/or Na; and subsequent thermal treatment of the tiles and crockery at 500-1300°C for 30-120 minutes.

2. A method for obtaining glazed ceramic articles according to claim 1, wherein said precursor compounds are selected from aluminium nitrate, zinc acetate, magnesium acetate, zirconium oxychloride, calcium nitrate, yttrium acetate, calcium acetate and colloidal silica.

3. A method for obtaining glazed ceramic articles according to the previous claims, wherein the content of dry material of said aqueous solution or dispersion is comprised between 15 and 70% by weight.

4. A method for obtaining glazed ceramic articles according to the previous claims, wherein the amount of said solution or dispersion deposited on said support is comprised between 1 and 100 g/m² and preferably between 10 and 50 g/m² as dry oxides and anhydrides contained in said solution or dispersion.

5. A method for obtaining glazed ceramic articles according to the previous claims, wherein a stabilising agent is added to said solution or dispersion.

6. A method for obtaining glazed ceramic articles according to claim 5, wherein said stabilising agent is a modified natural polymer or a synthetic polymer or a surfactant or a pH adjusting agent.

7. A method for obtaining glazed ceramic articles according to the previous claims, wherein a ceramic pigment is added to said solution or dispersion, the content thereof being comprised between 5 and 10% by weight on the dry content of said solution or dispersion.

8. A method for obtaining glazed ceramic articles according to the previous claims, wherein the tiles and crockery are made of porcelained stoneware.

9. A method for obtaining glazed ceramic articles according to the previous claims, wherein another of said solution or dispersion, superimposed to the first one or geometrically combined therewith, is applied subsequently to said solution or dispersion.

## Patentansprüche

1. Verfahren zum Erhalt von glasierten keramischen Gegenständen, gekennzeichnet durch Aufbringen einer wässrigen Lösung oder Dispersion, die einen nicht-frittierten bzw. einen nicht-gesinterten Vorläufer der gewünschten Glasur enthält, auf Fliesen und Steingut, wobei der genannte Vorläufer im Wesentlichen aus einem Gemisch aus:
- kolloidalem Siliciumdioxid,
- mindestens einer anorganischen Metallverbindung, ausgewählt aus Borat und Nitrat,
- mindestens einem Metallacetat,
- und gegebenenfalls Zirkoniumoxychlorid,
besteht,
wobei das genannte Metall Al, Ti, Y, Zn, Zr, Ca, Mg und/oder Na ist; und durch nachfolgende thermische Behandlung der Fliesen und des Steinguts bei 500 bis 1300°C über 30 bis 120 Minuten.

2. Verfahren zum Erhalt von glasierten keramischen Gegenständen nach Anspruch 1, dadurch **gekennzeichnet**, dass die genannten Vorläuferverbindungen aus Aluminiumnitrat, Zinkacetat, Magnesiumacetat, Zirkoniumoxychlorid, Calciumnitrat, Yttriumacetat, Calciumacetat und kolloidalem Siliciumdioxid ausgewählt werden.

3. Verfahren zum Erhalt von glasierten keramischen Gegenständen nach den vorstehenden Ansprüchen, dadurch **gekennzeichnet**, dass der Gehalt der wässrigen Lösung oder Dispersion an trockenem Material zwischen 15 und 70 Gew.-% liegt.

4. Verfahren zum Erhalt von glasierten keramischen Gegenständen nach den vorstehenden Ansprüchen, dadurch **gekennzeichnet**, dass die Menge der genannten Lösung oder Dispersion, die auf dem genannten Träger abgeschieden ist, zwischen 1 und 100 g/m² und vorzugsweise zwischen 10 und 50 g/m² als trockene Oxide und Anhydride, die in der genanten Lösung oder Dispersion enthalten sind, beträgt.

5. Verfahren zum Erhalt von glasierten keramischen Gegenständen nach den vorstehenden Ansprüchen, dadurch **gekennzeichnet**, dass zu der genannten Lösung oder Dispersion ein Stabilisierungsmittel gegeben wird.

6. Verfahren zum Erhalt von glasierten keramischen Gegenständen nach Anspruch 5, dadurch **gekennzeichnet**, dass das genannte Stabilisierungsmittel ein modifiziertes natürliches Polymeres oder ein synthetisches Polymeres oder ein Netzmittel oder ein Mittel zur Einstellung des pH-Werts ist.

7. Verfahren zum Erhalt von glasierten keramischen Gegenständen nach den vorstehenden Ansprüchen, dadurch **gekennzeichnet**, dass ein keramisches Pigment zu der genannten Lösung oder Dispersion gegeben wird, wobei dessen Gehalt zwischen 5 und 10 Gew.-%, bezogen auf den Trockengehalt der genannten Lösung oder Dispersion, beträgt.

8. Verfahren zum Erhalt von glasierten keramischen Gegenständen nach den vorstehenden Ansprüchen, dadurch **gekennzeichnet**, dass die Fliesen und das Steingut aus porzellänisiertem Steingut bzw. Steinzeug bestehen.

9. Verfahren zum Erhalt von glasierten keramischen Gegenständen nach den vorstehenden Ansprüchen, dadurch **gekennzeichnet**, dass eine weitere Lösung oder Dispersion der ersten überlagert oder damit geometrisch kombiniert nachfolgend auf die genannte Lösung oder Dispersion aufgebracht wird

## Revendications

1. Procédé pour obtenir des articles vitrifiés en céramique consistant en l'application sur les carreaux et la poterie d'une solution ou d'une dispersion aqueuse contenant un précurseur non fritté de la vitrification souhaitée dans lequel ledit précurseur consiste essentiellement en un mélange de :
- silice colloïdale,
- au moins un composé métallique inorganique choisi entre un borate et un nitrate,
- au moins un acétate de métal,
- et éventuellement un oxychlorure de zirconium,
ledit métal étant Al, Ti, Y, Zn, Zr, Ca, Mg et/ou Na ; et un traitement thermique postérieur des carreaux et de la poterie à 500-1300°C pendant 30-120 minutes.

2. Procédé pour obtenir des articles vitrifiés en céramique selon la revendication 1, dans lequel lesdits composés précurseurs sont choisis entre un nitrate d'aluminium, de l'acétate de zinc, de l'acétate de magnésium, de l'oxychlorure de zirconium, du nitrate de calcium, de l'acétate d'yttrium, de l'acétate de calcium et de la silice colloïdale.

3. Procédé pour obtenir des articles vitrifiés en céramique selon l'une des revendications précédentes, dans lequel le pourcentage de matière sèche de ladite solution ou de ladite dispersion aqueuse est compris entre 15 et 70% en poids.

4. Procédé pour obtenir des articles vitrifiés en céramique selon l'une des revendications précédentes, dans lequel la quantité de ladite solution ou de ladite dispersion déposée sur ledit support est comprise entre 1 et 100 g/m² et préférentiellement entre 10 et 50 g/m² pour les oxydes secs et les anhydrides contenu dans ladite solution ou ladite dispersion.

5. Procédé pour obtenir des articles vitrifiés en céramique selon l'une des revendications précédentes, dans lequel un agent stabilisant est ajouté à ladite solution ou ladite dispersion.

6. Procédé pour obtenir des articles vitrifiés en céramique selon la revendication 5, dans lequel ledit agent stabilisant est un polymère naturel modifié ou un polymère synthétique ou un surfactant ou un agent ajustant le ph.

7. Procédé pour obtenir des articles vitrifiés en céramique selon l'une des revendications précédentes, dans lequel un pigment céramique est ajouté à ladite solution ou ladite dispersion, le contenu de celui-ci étant compries entre 5 et 10% du poids du contenu sec de ladite solution ou de ladite dispersion.

8. Procédé pour obtenir des articles vitrifiés en céramique selon l'une des revendications précédentes, dans lequel les carreaux et la poterie sont réalisés en grès avec de la porcelaine.

9. Procédé pour obtenir des articles vitrifiés en céramique selon l'une des revendications précédentes, dans lequel une autre desdites solutions ou desdites dispersions, superposée à la première ou combiné géométriquement avec celle-ci, est ensuite appliquée à ladite solution ou à ladite dispersion.
